# EUROPÄISCHE PATENTSCHRIFT

(11) **EP 0 808 696 B1**
(45) Veröffentlichungstag und Bekanntmachung des Hinweises auf die Patenterteilung: **13.12.2000**
(21) Anmeldenummer: 97810298.6
(22) Anmeldetag: 14.05.1997
(51) Int. Cl.: B25D 17/00, F16B 19/00

(54) **Befestigungssystem und Verfahren zur Erstellung von Befestigungen**
Fastening system and process for providing fastenings
Système de fixation et procédé de réalisation de fixations

(30) Priorität: 24.05.1996 DE 19620955
(43) Veröffentlichungstag der Anmeldung: 26.11.1997
(73) Patentinhaber: HILTI Aktiengesellschaft, 9494 Schaan (LI)
(72) Erfinder: Gschwend, Hans, 9470 Buchs (CH); Noser, Martin, 9490 Vaduz (LI)
(74) Vertreter: Wildi, Roland

(56) Entgegenhaltungen:
- EP-A- 0 464 574
- DE-A- 3 914 512
- US-A- 3 396 930

## Beschreibung

Die Erfindung betrifft ein Befestigungssystem gemäss dem Oberbegriff des Patentanspruchs 1. Weiters betrifft die Erfindung auch ein Verfahren zur Erstellung von Befestigungen gemäss dem Oberbegriff des Patentanspruchs 7.

Für die Erstellung von Befestigungen in unterschiedlich festen Untergründen werden verschiedene Verfahren eingesetzt. Am gebräuchlichsten sind sequentielle Verfahren und die Direkt-Montagetechnik. Die sequentiellen Befestigungsverfahren sind für alle Arten von Untergründen geeignet. Je nach Art des Untergrunds und der zu erzielenden Befestigungswerte kommen auch unterschiedliche Arten von Befestigungselementen zum Einsatz. Bei dem sequentiellen Verfahren wird zunächst mit einer Bohreinrichtung im Untergrund eine Aufnahmebohrung erstellt. Die Bohreinrichtung besteht dabei aus einem Metall-, Gesteins- oder auch Holzbohrer, der von einem Handgerät mit motorischem Drehantrieb und gegebenenfalls axialer Schlagunterstützung angetrieben wird. Nach der Erstellung der Aufnahmebohrung wird das Befestigungselement in die Aufnahmebohrung eingesetzt und in den meisten Fällen durch Verspreizen in der Aufnahmebohrung verankert.

Bei der Direkt-Montagetechnik wird ein spezielles Befestigungselement mit Hilfe eines pulverkraftbetriebenen Setzgerätes direkt in den Untergrund eingetrieben. Bei dieser Befestigungsmethode entfällt das separate Erstellen einer Aufnahmebohrung für das Befestigungselement. Die Direkt-Montagetechnik ist schnell und führt zu Befestigungen mit hohen Haltewerten. Allerdings ist die bekannte Direkt-Montagetechnik nur für mehr oder weniger duktile Untergründe, wie beispielsweise Stahl oder Beton, geeignet.

Weniger feste oder spröde Untergründe, wie beispielsweise Ziegelmauerwerk, werden bei der bekannten Direkt-Montagetechnik mittels pulverkraftbetriebenen Setzgeräten sehr stark beansprucht und oft sogar beschädigt und führen zu keinen zuverlässigen Befestigungen. Daher wird für Verankerungen in diesen Untergründen im wesentlichen nur das sequentielle Befestigungsverfahren eingesetzt. Dieses schont den Untergrund und führt zu zuverlässigen Befestigungen mit den gewünschten Haltewerten. Allerdings muss dafür ein deutlich grösserer Zeitaufwand je Befestigungspunkt in Kauf genommen werden. Ausserdem sind meist separate Geräte für die Erstellung der Aufnahmebohrungen und für die Verankerung der Befestigungselemente in den Aufnahmebohrungen erforderlich, beispielsweise ein Bohrgerät mit Bohreinrichtung zum Bohren der Aufnahmebohrung und ein Schraubgerät zum Eindrehen einer Befestigungsschraube in einen Dübel, wobei der Dübel verspreizt wird.

Es besteht daher der Wunsch nach einem Befestigungssystem und einem Befestigungsverfahren, welches es auch in weniger festen oder spröden Untergründen, wie beispielsweise Ziegelmauerwerk, erlaubt, schnell und zuverlässig ein Befestigungselement zu verankem. Auf die sequentielle Abfolge des Erstellens einer Aufnahmebohrung und des nachfolgenden Einsetzens eines Befestigungselements in die Aufnahmebohrung und schliesslich des Verspreizens des Befestigungselements soll verzichtet werden können. Die Notwendigkeit, mehrere verschiedene Geräte für die Erstellung der Aufnahmebohrung und für die nachfolgende Verankerung des Befestigungselements mitzuführen, soll entfallen. Dabei soll der Untergrund geschont werden und sollen Befestigungen mit den geforderten Haltewerten erzielt werden können.

Die Lösung dieser Aufgaben besteht in einem Befestigungssystem gemäss dem kennzeichnenden Abschnitt des Patentanspruchs 1 sowie in einem Befestigungsverfahren mit den im kennzeichnenden Abschnitt des Patentanspruchs 7 angeführten Verfahrensschritten. Insbesondere wird durch die Erfindung ein Befestigungssystem geschaffen, welches eine Bohreinrichtung zum drehenden Erstellen von Aufnahmebohrungen, die mit einer Bohrspitze ausgestattet ist und deren der Bohrspitze gegenüberliegendes Ende als Einsteckende für ein mit einem Drehantrieb und einem Schlagwerk für Axialschläge ausgestatteten Handgerät ausgebildet ist, und ein in einer Aufnahmebohrung verankerbares, rohrartiges Befestigungselement mit einer axialen Durchgangsbohrung umfasst. Die Erfindung besteht in der Kombination der folgenden Merkmale: das Befestigungselement besitzt einen grösseren Aussendurchmesser als der Durchmesser des Hüllkreises der Bohrspitze; die Bohreinrichtung durchsetzt die axiale Durchgangsbohrung des rohrartigen Befestigungselements, wobei die Bohrspitze das Befestigungselement an seinem in Setzrichtung vorderen Ende und das Einsteckende der Bohreinrichtung das Befestigungselement an seinem rückwärtigen Ende axial überragt; die Bohreinrichtung und das Befestigungselement sind während des Setzvorgangs drehentkoppelt; das rückwärtige Ende des Befestigungselement ist während des Setzvorgangs derart mit dem Handgerät in Anlage, dass die vom Schlagwerk erzeugten Axialschläge auf das Befestigungselement übertragbar sind, wobei das Befestigungselement gleichzeitig mit der Erstellung der Aufnahmebohrung in die Aufnahmebohrung eingetrieben und dort verankert wird.

Das erfindungsgemässe Befestigungssystem erlaubt es auch auf weniger festen oder spröden Untergründen, wie beispielsweise Ziegelmauerwerk, Befestigungspunkte in einer Direkt-Montagetechnik zu erstellen. Zwar wird nach wie vor eine Aufnahmebohrung erstellt, jedoch wird das Befestigungselement gleichzeitig in der Aufnahmebohrung verankert. Dadurch wird der gesamte Arbeitsvorgang für das Erstellen eines Befestigungspunktes vereinfacht und wird die Gesamtzeit für die Erstellung des Befestigungspunktes deutlich reduziert. Die Erstellung eines Befestigungspunktes mit dem erfindungsgemässen Befestigungssystem erfordert auch keine unterschiedlichen Geräte für das Erstellen der Aufnahmebohrung und für das anschliessende Einsetzen und Verankem des Befestigungselements. Das ein Befestigungselement und eine Bohreinrichtung umfassende Befestigungssystem verlangt nur ein einziges Handgerät, welches die während des Setzvorgangs von dem Befestigungselement drehentkoppelte Bohreinrichtung in Drehbewegung versetzt und gleichzeitig das Befestigungselement mit Hilfe von axialen Schlägen in die im Untergrund erstellte Aufnahmebohrung eintreibt. Das erfindungsgemässe Befestigungssystem ist einfach in seiner Anwendung und vereint die Vorteile einer schnellen Erstellung von Befestigungspunkten in einer Direkt-Montagetechnik mit der schonenden Behandlung des Untergrunds bei sequentiellen Befestigungsverfahren. Durch die Erfindung wird es ermöglicht, auch in weniger festen oder spröden Untergründen, wie beispielsweise Ziegelmauerwerk, Befestigungen mit Hilfe einer Direkt-Montagetechnik zu erstellen.

In einer vorteilhaften Ausführungsvariante des erfindungsgemässen Befestigungssystems ist das Befestigungselement an seinem in Setzrichtung vorderen Ende mit Schneiden ausgestattet und weist dort eine Querschnittskontur auf, die verschieden von der Querschnittskontur des rückwärtigen Endes des Befestigungselements ist. Durch die Schneiden wird die Aufnahmebohrung schabend oder meisselnd gemäss der Querschnittskontur des vorderen Endes kalibriert. Beim vollständigen Eintreiben des Befestigungselements verklemmt sich der eine andere Querschnittskontur aufweisende rückwärtige Bereich des Befestigungselements in der kalibrierten Aufnahmebohrung.

Vorzugsweise weist das Befestigungselement im Bereich der Schneiden einen von der Kreisringform abweichenden Querschnitt auf, der zum rückwärtigen Ende des Befestigungselements in einen kreisringförmigen Querschnitt übergeht. Die Schneiden am Vorderende des Befestigungselements bauen den Randbereich der vorgebohrten Aufnahmebohrung schabend oder meisselnd ab. Dabei wird die zunächst einen kreisförmigen Querschnitt aufweisende Aufnahmebohrung gemäss dem von der Kreisringform abweichenden Querschnitt des vorderen Abschnitts des Befestigungselements kalibriert. Im Verlauf des durch axiale Schläge erfolgenden Eintreibvorgangs des Befestigungselements wird der zum rückwärtigen Bereich wieder in einen kreisförmigen Querschnitt übergehende Abschnitt des Befestigungselements in der kalibrierten Aufnahmebohrung festgeklemmt.

Es ist zweckmässig, wenn der Querschnitt des Befestigungselements an seinem mit Schneiden ausgestatteten Vorderende elliptisch ist. Die elliptische Form ist sehr einfach herzustellen, beispielsweise indem das Vorderende des einen kreisringförmigen Querschnitt aufweisenden Befestigungselements in einem definierten Ausmass gequetscht wird. Das mit Schneiden ausgestattete Vorderende kann aber auch einen unrunden Querschnitt, beispielsweise eine vieleckige Form, besitzen. Es muss nur gewährleistet sein, dass der Querschnitt des Befestigungselements zu seinem rückwärtigen Abschnitt hin derart verändert ist, dass beim Eintreiben des Befestigungselements dieser Abschnitt in der unrund kalibrierten Aufnahmebohrung verklemmt wird. Zweckmässigerweise besitzt daher der rückwärtige Abschnitt des rohrförmigen Befestigungselements einen kreisringförmigen Querschnitt.

Es erweist sich als vorteilhaft, wenn das Befestigungselement entlang seiner axialen Erstreckung und über seinen Umfang verteilt eine Anzahl von Öffnungen aufweist, deren Durchmesser kleiner ist als der Hüllkreis der Bohrspitze. Die Öffnungen im Mantel des rohrförmigen Befestigungselements dienen der Abfuhr des beim Erstellen der Aufnahmebohrung erzeugten Bohrmehls, welches von der Bohrspitze über den mit einer Förderwendel versehenen Schaft der Bohreinrichtung nach rückwärts transportiert wird.

In einer weiteren zweckmässigen Ausführungsform des erfindungsgemässen Befestigungssystems weist das rohrartige Befestigungselement einen sich über seine gesamte axiale Länge erstreckenden Schlitz auf. Auf diese Weise ist das längsgeschlitzte Befestigungselement gegen die Federkraft seines Materials in radialer Richtung elastisch zusammenpressbar. Der Aussendurchmesser des noch nicht gefügten Befestigungselements ist grösser als der Nenndurchmesser der erstellten Aufnahmebohrung bzw. des Hüllkreises der Bohrspitze. Beim Eintreiben durch axiale Schläge während der bohrenden Erstellung der Aufnahmebohrung wird das längsgeschlitzte Befestigungselement gegen die Federkraft seines Materials radial auf den Nenndurchmesser der Aufnahmebohrung zusammengepresst. Im gesetzten Zustand des Befestigungselements bestimmt die sich einstellende radiale Anpressung mit dem Haftreibungskoeffizienten und der Kontaktfläche zwischen der Aufnahmebohrung und dem Befestigungselement den erzielbaren Haltewert.

Die Bohrspitze kann permanent mit dem Schaft der Bohreinrichtung verbunden sein. Beispielsweise kann die Bohreinrichtung ein gängiger Mauerwerks- oder Gesteinsbohrer sein, der nach dem Setzvorgang aus der mit dem Befestigungselement bestückten Aufnahmebohrung gezogen wird. In einer zweckmässigen Variante der Erfindung ist die Bohrspitze lösbar mit dem Vorderende des Befestigungselements verbunden, insbesondere an das Vorderende ansteckbar. Die Bohrspitze ist für den Setzvorgang des Befestigungselements drehfest mit der Bohreinrichtung verbindbar, insbesondere auf das vordere Schaftende der Bohreinrichtung aufsteckbar. Nach Beendigung des Setzvorgangs ist der Schaft durch axiales Ziehen wieder von der Bohrspitze lösbar. Die Bohrspitze verbleibt in der Aufnahmebohrung, während der Schaft der Bohreinrichtung wieder aus der mit dem Befestigungselement bestückten Aufnahmebohrung herausgezogen wird. Bei dieser Ausführungsvariante der Erfindung wird das Befestigungselement bereits mit aufgesteckter Bohrspitze bereitgestellt. Nach dem Anstecken des Schaftes der Bohreinrichtung ist die Bohrspitze durch eine relativ kleine axiale Kraft wieder vom Vorderende des Befestigungselements lösbar, wobei es drehfest mit dem Schaft verbunden bleibt. Dieser Vorgang erfolgt in der Regel automatisch in dem Augenblick, in dem das Vorderende des Befestigungselements, welches gegenüber dem Hüllkreis der Bohrspitze ein Übermass aufweist, an der Bohriochmündung ansteht. Dadurch können die Bohrspitze und das Befestigungselement sehr einfach drehentkoppelt werden. Erst durch die axialen Schläge wird das Befestigungselement in die Aufnahmebohrung eingetrieben, wobei es entweder die Randbereiche der Aufnahmebohrung gemäss der Querschnittsform an seinem Vorderende abbaut oder radial zusammengepresst wird.

Das erfindungsgemässe Verfahren zur Erstellung von Befestigungen, bei dem mit einer Bohreinrichtung eine Aufnahmebohrung erstellt und ein Befestigungselement in der Aufnahmebohrung verankert wird, zeichnet sich dadurch aus, dass die Bohreinrichtung durch eine axiale Durchgangsbohrung im Befestigungselement geführt wird und das Befestigungselement, welches gegenüber dem Durchmesser der Aufnahmebohrung ein Übermass aufweist, gleichzeitig mit dem Bohrvorgang durch schlagendes Eintreiben in der Aufnahmebohrung verankert, insbesondere verklemmt wird. Das erfindungsgemässe Verfahren ist ein Direkt-Montageverfahren, bei dem gleichzeitig drehbohrend eine Aufnahmebohrung erstellt und das Befestigungselement in dieser Aufnahmebohrung verankert wird. Dabei weist das Verfahren die Vorteile der Direkt-Montagetechnik auf, indem es schnell und einfach durchführbar ist und keine separaten Geräte für die Erstellung der Aufnahmebohrung und für die Verankerung des Befestigungselements erforderlich sind. Dazu wird bei dem erfindungsgemässen Verfahren der Untergund schonend behandelt. Daher kann dieses neuartige Direkt-Montageverfahren auch bei weniger festen oder spröden Untergründen, wie beispielsweise Ziegelmauerwerk, angewendet werden.

In einer Variante des erfindungsgemässen Verfahrens wird die im Querschnitt im wesentlichen kreisrunde Aufnahmebohrung beim schlagenden Eintreiben des Befestigungselements durch Schneiden am in Setzrichtung vorderen Ende des Befestigungselements, welches beispielsweise einen von der Kreisringform abweichenden, insbesondere elliptischen, Querschnitt aufweist, kalibriert, indem die Schneiden die Randbereiche der Aufnahmebohrung schabend oder meisselnd abbauen. Die Verankerung des Befestigungselements erfolgt beim weiteren Eintreiben des Befestigungselements durch Verklemmen des beispielsweise einen kreisringförmigen Querschnitt aufweisenden rückwärtigen Abschnitts des Befestigungselements in der auf den Querschnitt seines Vorderendes kalibrierten Aufnahmebohrung. Das Befestigungselement kann dabei eine geschlossene Hülle aufweisen oder auch im wesenlichen in Längsrechtung geschlitzt sein. Der durchgehende Längsschlitz erlaubt eine zusätzliche Verklemmung in der Aufnahmebohrung durch radiales Zusammenpressen der längsgeschlitzten Hülle gegen die Federkraft des Materials des Befestigungselements beim Eintreiben in die Aufnahmebohrung.

In einer alternativen Ausführungsvariante des erfindungsgemässen Verfahrens wird die Verankerung des ein Übermass aufweisenden Befestigungselements in der Aufnahmebohrung allein durch elastisches, radiales Zusammenpressen des über seine gesamte axiale Länge mit einem Schlitz versehenen Befestigungselements gegen die Federkraft seines Materials beim schlagenden Eintreiben in die Aufnahmebohrung erreicht. Bei dieser Verfahrensvariante wird ein Befestigungselement eingetrieben, welches über seine gesamte axiale Erstreckung mit einem Längsschlitz versehen ist. Die Verankerung des Befestigungselements in der Aufnahmebohrung erfolgt durch Verklemmen des Befestigungselements, welches gegenüber dem Nenndurchmesser der Aufnahmebohrung ein Übermass aufweist. Durch das radiale Zusammenpressen gegen die Federkraft des Materials des Befestigungselements wird eine radiale Kraft erzeugt, die zusammen mit dem Haftreibungskoeffizienten und der Anlagefläche den erzielbaren Haltewert festlegt.

Während das Verfahren mit einem konventionellen Mauerwerks- oder Gesteinsbohrer durchführbar ist, der nach dem Setzvorgang wieder entnommen werden kann, sieht eine vorteilhafte Verfahrensvariante vor, dass das Befestigungselement an seinem in Setzrichtung vorderen Ende lösbar mit einer Bohrspitze ausgestattet wird, an die das durch die axiale Bohrung des Befestigungselements geführte Schaftende der Bohreinrichtung drehfest angekoppelt wird. Beim Setzvorgang wird die Bohrspitze zur Erstellung der Aufnahmebohrung ausser Eingriff mit dem Vorderende des Befestigungslements gebracht und gegenüber diesem drehentkoppelt. Beim axialen Entfernen des Schaftes der Bohreinrichtung aus der axialen Bohrung des Befestigungselements wird die Bohrspitze vom Schaft der Bohreinrichtung gelöst, wobei eine definierte Mindestkraft aufgewendet werden muss, und verbleibt in der mit dem Befestigungselement bestückten Aufnahmebohrung. Durch die Notwendigkeit, zum Lösen der Verbindung zwischen der Bohrspitze und dem Schaft der Bohreinrichtung eine definierte Mindestkraft aufwenden zu müssen, kann der Abziehvorgang gleichzeitig zur Prüfung des Mindesthaltewertes des Befestigungspunktes herangezogen werden.

Im folgenden wird die Erfindung unter Bezugnahme auf die schematischen Darstellungen anhand von Ausführungsbeispielen näher erläutert. Es zeigen:
- Fig. 1: eine Ansicht eines ersten Ausführungsbeispiels eines Befestigungssystems, umfassend ein Befestigungselement und eine Bohreinrichtung;
- Fig. 2: einen Querschnitt des vorderen, Schneiden aufweisenden Bereichs des Befestigungselements aus Fig. 1;
- Fig. 3: eine Ansicht einer Variante des Befestigungssystems gemäss Fig. 1; und
- Fig. 4: eine Ansicht eines weiteren Befestigungssystem gemäss der Erfindung.

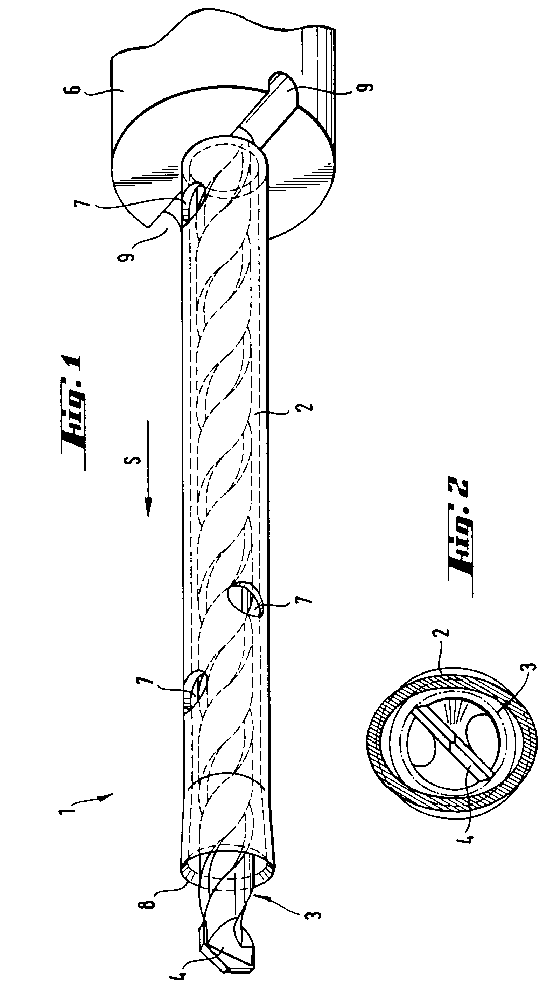

Das in Fig. 1 dargestellte erste Ausführungsbeispiel des erfindungsgemässen Befestigungssystems ist gesamthaft mit dem Bezugszeichen 1 bezeichnet. Es umfasst ein rohrförmiges Befestigungselement 2 und eine Bohreinrichtung 3. Die Bohreinrichtung 3 ist mit einer Bohrspitze 4 ausgestattet, die das setzrichtungsseitige Vorderende des Befestigungselements 2 überragt. Die Setzrichtung ist in Fig. 1 durch den Pfeil S angedeutet. Das rückwärtige Ende der Bohreinrichtung 3 ist mit einem Einsteckende 5 ausgestattet, welches zum Anstecken in eine Werkzeugaufnahme 6 eines nicht näher dargestellten Handgerätes ausgebildet ist, welches mit einem motorischen Drehantrieb für die Bohreinrichtung 3 und mit einem Schlagwerk für die Erzeugung von axialen Schlägen ausgestattet ist. Im dargestellten Ausführungsbeispiel handelt es sich bei der Bohreinrichtung 3 um einen konventionellen Mauerwerks- oder Gesteinsbohrer, der durch die axiale Durchgangsbohrung des Befestigungselements 2 geführt ist.

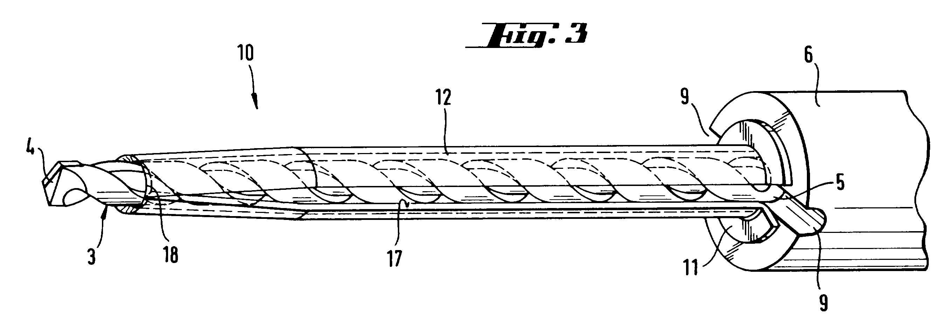

An seinem Vorderende weist das Befestigungselement Schneiden 8 auf, die für den schabenden oder meisselnden Abbau des Randbereichs der erstellten Aufnahmebohrung ausgebildet sind. Im Bereich der Schneiden 8 weist das Befestigungselement 2 einen von der Kreisringform abweichenden Querschnitt auf. Insbesondere ist der Querschnitt beispielsweise elliptisch, wie in Fig. 2 dargestellt. Der elliptische Querschnitt im Bereich der Schneiden 8 geht zum rückwärtigen Abschnitt des Befestigungselements in einen kreisförmigen Querschnitt über. Die durch die axiale Durchgangsbohrung des Befestigungselements geführte Bohreinrichtung 3 überragt das Befestigungselement an seinem Vorderende und an seinem rückwärtigen Ende. Am rückwärtigen Ende ragt das Einsteckende 5 aus der Durchgangsbohrung und erlaubt den Anschluss an das Einsteckende 6 eines Handgerätes. Das rückwärtige Ende des Befestigungselements 2 ist in Anlage mit dem Handgerät, damit axiale Schläge auf das Befestigungselement 2 übertragbar sind. Am Vorderende überragt die Bohrspitze 4 die Schneiden 8 derart, dass beim Setzvorgang die Bohrspitze 4 den Schneiden 8 am Vorderende des Befestigungselements um einige Millimeter, beispielsweise etwa 10 mm, vorauseilt.

Es versteht sich, dass das rohrförmige Befestigungselement 2 auch andere, von der Kreis- bzw. Ellipsenform abweichende Querschnittskonturen aufweisen kann. Die Funktion des erfindungsgemässen Befestigungselements 2 ist auch gewährleistet, wenn der die Schneiden 8 aufweisende vordere Bereich des Befestigungselements 8 beispielsweise einen kreisringförmigen Querschnitt aufweist und der rückwärtige Abschnitt des Befestigungselements 2 einen von der Kreisringform abweichenden Querschnitt besitzt. Die Schneiden 8 am vorderen Ende des Befestigungselements 2 kalibrieren die Aufnahmebohrung gemäss ihrer Querschnittskontur. Beim vollständigen Eintreiben des Befestigungselements 2 in die Aufnahmebohrung wird der eine davon abweichende Querschnittskontur aufweisende rückwärtige Bereich in der kalibrierten Aufnahmebohrung durch Klemmung verankert.

Im Mantel des rohrförmigen Befestigungselements 2 sind Öffnungen 7 vorgesehen, die zur Abfuhr des bei der Erstellung der Aufnahmebohrung auftretenden und über die Förderwendel des Bohrers transportierten Bohrmehls dienen. Im Bereich der Werkzeugaufnahme 6 können auch noch radial verlaufende Nuten 9 vorgesehen sein, die ebenfalls der Bohrmehlabfuhr dienen.

Im folgenden wird die Erstellung eines Befestigungspunktes mittels des erfindungsgemässen Befestigungssystems 1 erläutert. Die Bohreinrichtung 3, die im dargestellten Ausführungsbeispiel ein Mauerwerks- oder ein Gesteinsbohrer ist, wird durch die axiale Bohrung des Befestigungselements 2 geführt. Dabei erleichtert die Tatsache, dass der Durchmesser des Befestigungselements 2 insbesondere auch im Bereich der Schneiden 8 trotz des von der Kreisringform abweichenden Querschnitts grösser ist als der Durchmesser des Hüllkreises der Bohrspitze 4, das Durchführen der Bohreinrichtung 3. Das Einsteckende 5 der Bohreinrichtung 3 ist in die Werkzeugaufnahme eines Drehbohrgrätes mit einem Schlagwerk für die Erzeugung von axialen Schlägen eingesteckt.

Zur Erstellung des Befestigungspunktes wird die Bohrspitze 4 an den Untergrund angesetzt und wird der Antrieb des Hangeräts betätigt. Die einige Millimeter gegenüber den Schneiden 8 am Befestigungselement 2 vorauseilende Bohrspitze 4 erzeugt im Untergrund eine Aufnahmebohrung mit im wesentlichen kreisrundem Querschnitt, dessen Durchmesser dem Durchmesser des Hüllkreises der Bohrspitze 4 entspricht. Das Befestigungselement 2 und die Bohreinrichtung 3 sind drehentkoppelt, da das Befestigungselement 2 zunächst axial gegenüber dem Schaft der Bohreinrichtung 3 verschiebbar ist. Das gegenüber dem Durchmesser der Aufnahmebohrung ein Übermass aufweisende Vorderende des Befestigungselements 2 steht an der Oberfläche des Untergrunds an und kann solange nach rückwärts gleiten bis sein rückwärtiges Ende in Anlage zur Werkzeugaufnahme 6 kommt. Nunmehr werden die vom Handgerät erzeugten axialen Schläge auf das Befestigungselement 2 übertragen, welches dadurch in die vorbereitete Aufnahmebohrung eingetrieben wird. Dabei bauen die am Vorderende des Befestigungselements 2 vorgesehenen Schneiden 8 die Randzone der Aufnahmebohrung ab und kalibrieren diese gemäss der Querschnittsform des Befestigungselements 2 im Bereich der Schneiden 8. Beim weiteren Eintreiben des Befestigungselements wird der einen kreisringförmigen Querschnitt aufweisende Abschnitt des Befestigungselements 2 In der nicht-kreisringförmig kalibrierten Aufnahmebohrung festgeklemmt. Nach Beendigung des Befestigungsvorgangs wird die Bohreinrichtung aus der mit dem Befestigungselement 2 bestückten Aufnahmebohrung entnommen und kann der Vorgang mit einem neuen Befestigungselement an anderer Stelle wiederholt werden.

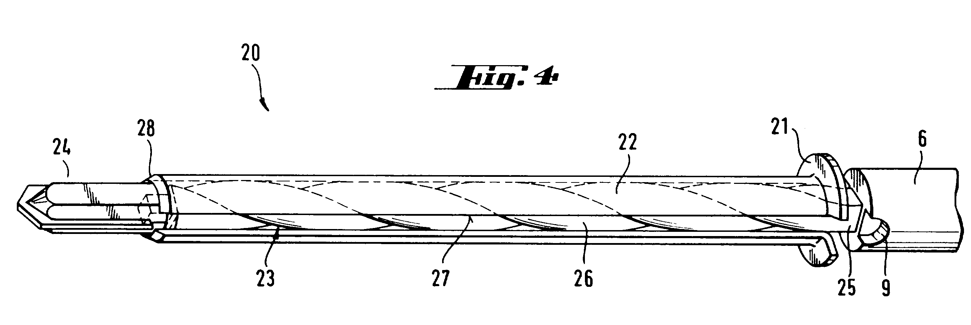

Fig. 3 zeigt eine Ansicht eines modifizierten Befestigungssystems 10. Wie bei dem in Fig. 1 dargestellten Befestigungssystem weist auch dieses eine Bohreinrichtung 3 auf, deren Bohrspitze 4 und Einsteckende 5 das Befestigungselement 12 an seinen beiden Enden axial überragen. Das Einsteckende 5 ist In einer Werkzeugaufnahme 6 eines Handgerätes dargestellt. Radial verlaufende Nuten 9 an der Werkzeugaufnahme 6 unterstützen den Bohrmehlabtransport. Das Befestigungselement 12 besitzt an seinem vorderen Ende Schneiden 18 für den schabenden Abbau der Randzone der Aufnahmebohrung. Am rückwärtigen Ende weist das Befestigungselement einen umlaufenden Ringbund 11 auf, der als Anschlag am Untergrund dient und sobald er in Anlage mit dem Untergrund oder der Oberfläche eines zu befestigenden Bautels anliegt, das Ende des Befestigungsvorgangs anzeigt. Gleichzeitig bildet der Ringbund auch eine Anlagefläche für die Werkzeugaufnahme zur Übertragung der axialen Schläge. Das Befestigungselement 12 weist einen Längsschlitz 17 auf, der sich über seine gesamte Länge erstreckt. Im Bereich der Schneiden 18 verjüngt sich der Längsschlitz 17 und kann beispielsweise durch einen Schweisspunkt geschlossen sein. Das Befestigungselement 12 weist im Bereich der Schneiden 18 wiederum ein Übermass gegenüber der von der Bohreinrichtung 3 erstellten Aufnahmebohrung auf. Wegen des Längsschlitzes 17 kann dieses Übermass zum rückwärtigen Ende hin noch vergrössert sein. Dadurch kommt es beim schlagenden Eintreiben des Befestigungselements 12 nicht nur zu einem Verklemmen des einen kreisringförmigen Querschnitt aufweisenden Abschnittes in der nicht-kreisringförmig kalibrierten Aufnahmebohrung. Zusätzlich wird das Befestigungselement radial gegen die Federkraft seines Materials zusammengepresst. Dadurch entsteht eine zusätzliche Radialkraft, welche die Haltewerte des Befestigungselements in der Aufnahmebohrung unterstützt.

In Fig. 4 ist ein weiteres Ausführungsbeispiel des erfindungsgemässen Befestigungssystems dargestellt und gesamthaft mit dem Bezugszeichen 20 versehen. Es umfasst eine Bohreinrichtung 23, die durch die axiale Durchgangsbohrung eines Befestigungselements 22 geführt ist. Wiederum überragt die Bohreinrichtung 23 mit seiner Bohrspitze 24 bzw. mit seinem Einsteckende 25 das Befestigungselement 22 an seinen beiden Längsenden axial. Das Einsteckende 25 der Bohreinrichtung 23 ist in die Werkzeugaufnahme 6 eines nicht dargestellten Handgerätes eingesteckt, die mit radial verlaufenden Nuten 9 für die Bohrmehlabfuhr versehen sein kann. Das Befestigungselement 22 weist an seinem Vorderende eine Anfasung 28 auf. Am gegenüberliegenden rückwärtigen Ende ist ein umlaufender Ringbund 21 vorgesehen, der als Tiefenanschlag dient und zugleich eine Anlagefläche für die Werkzeugaufnahme 6 bildet. Ein Längsschlitz 27 erstreckt sich über die gesamte Länge des Befestigungselements 22. Die Bohrspitze 24 ist als zylindrisches Element ausgebildet, das eine Einsteckbohrung für den Schaft 26 der Bohreinrichtung 23 aufweist. Der Schaft 26 der Bohreinrichtung 23 kann, wie beispielsweise dargestellt, ein vierkantiger Dom sein, der unter Bildung einer Wendel über seine axiale Erstreckung verdrillt ist. Damit die aufgesteckte Bohrspitze 24 drehfest mit dem Schaft 26 verbunden ist, kann die Bohrung in dem zylindrischen Element beliebig mehrkantig ausgebildet sein.

Das Befestigungselement 22 kann für den Befestigungsvorgang dahingehend vorbereitet sein, dass die Bohrspitze 24 an sein mit der Anfasung 28 versehenes Vorderende angesteckt wird. Dies wird durch den Längsschlitz 27 noch erleichtert. Für den Befestigungsvorgang muss nur der Schaft 26 der Bohreinrichtung 23 durch die axiale Durchgangsbohrung des Befestigungselements 22 geführt werden und in die Bohrung der Bohrspitze 24 eingesteckt werden. Der Aussendurchmesser des Befestigungselements 22 ist grösser als der Durchmesser des Hüllkreises der Bohrspitze 24. Dadurch besitzt das Befestigungselement 22 gegenüber der Aufnahmebohrung, die mit der beim Befestigungsvorgang vorauseilenden Bohrspitze 24 erstellt wird, ein Übermass. Sobald das rückwärtige Ende des Befestigungselements 22 an der Werkzeugaufnahme 6 anliegt, erfolgt der Eintreibvorgang. Die Anfasung 28 am Vorderende des Befestigungselements 22 erleichtert das Einbringen in die durchmesserkleinere Aufnahmebohrung. Beim schlagenden Vortreiben in die Aufnahmebohrung wird das Befestigungselement 22 radial gegen die Federkraft seines Materials zusammengepresst. Die daraus resultierende radiale Kraft In Verbindung mit dem Reibungskoeffizienten und der Anlagefläche definiert den erzielbaren Haltewert. Nach Beendigung des Befestigungsvorgangs wird der Schaft 26 der Bohreinrichtung 23 aus der Aufnahmebohrung herausgezogen. Die Bohrspitze 24 verbleibt in der Aufnahmebohrung. Zweckmässigerweise wird die Klemmkraft zwischen dem Schaft 26 und der Bohrung in der Bohrspitze derart eingestellt, dass zum Herausziehen des Schaftes 26 eine gewisse Mindestkraft aufgewendet werden muss. Auf diese Weise kann der Vorgang des Herausziehens des Schaftes 26 gleichzeitig zur Prüfung des Mindeshaltewertes des Befestigungspunktes herangezogen werden.

Es versteht sich, dass bei allen Ausführungsvarianten des erfindungsgemässen Befestigungssystems Bohreinrichtungen eingesetzt werden können, die entweder eine permanent mit dem Schaft verbundene Bohrspitze aufweisen oder eine davon lösbare Bohrspitze aufweisen. Die rohrförmigen Befestigungselemente weisen an ihrem rückwärtigen Ende Lastangriffsmittel auf. Diese können ein Innengewinde oder ein Aussengewinde, Nuten für Schnappverbindungen, Schultern oder dergleichen sein. Die rohrförmigen Befestigungselemente können auch Bestandteil von Spezialbefestigungsmitteln, beispielsweise für die Befestigung von Dämmstoffplatten und dergleichen, sein. Zu diesem Zweck kann das rohrförmige Befestigungselement beispielsweise in einen zylindrischen Schaft eingebettet sein, der sich unterhalb einer Anpressplatte erstreckt. Das rohrförmige Befestigungselement kann auch Bestandteil von Halterungen für Kabel oder Rohre sein.

## Patentansprüche

1. Befestigungssystem umfassend eine Bohreinrichtung (3; 23) zum Erstellen von Aufnahmebohrungen, die mit einer Bohrspitze (4; 24) ausgestattet ist und deren der Bohrspitze (4; 24) gegenüberliegendes Ende als Einsteckende (5; 25) für ein mit einem Drehantrieb und einem Schlagwerk für Axialschläge ausgestatteten Handgerät ausgebildet ist, und ein in einer Aufnahmebohrung verankerbares, rohrartiges Befestigungselement (2; 12; 22) mit einer axialen Durchgangsbohrung, **dadurch gekennzeichnet,** dass das Befestigungselement (2; 12; 22) einen grösseren Aussendurchmesser aufweist als der Durchmesser des Hüllkreises der Bohrspitze (4; 24), dass die Bohreinrichtung (3; 23) die axiale Durchgangsbohrung des rohrartigen Befestigungselements (2; 12; 22) durchsetzt, wobei die Bohrspitze (4; 24) das Befestigungselement (2; 12; 22) an seinem in Setzrichtung (S) vorderen Ende und das Einsteckende (5; 25) der Bohreinrichtung (3; 23) das Befestigungselement (2; 12; 22) an seinem rückwärtigen Ende axial überragt, dass die Bohreinrichtung (3; 23) und das Befestigungselement (2; 12; 22) während des Befestigungsvorgangs drehentkoppelt sind und das rückwärtige Ende des Befestigungselementes (2; 12; 22) derart mit dem Handgerät in Anlage ist, dass die vom Schlagwerk erzeugten Axialschläge auf das Befestigungselement (2; 12; 22) übertragbar sind, wobei das Befestigungselement (2; 12; 22) gleichzeitig mit der Erstellung der Aufnahmebohrung in die Aufnahmebohrung eingetrieben und dort verankert wird.

2. Befestigungssystem nach Anspruch 1, dadurch gekennzeichnet, dass das Befestigungselement (2; 12) an seinem in Setzrichtung vorderen Ende mit Schneiden (8; 18) ausgestattet ist und im Bereich der Schneiden (8; 18) eine Querschnittskontur aufweist, die verschieden von der Querschnittskontur des rückwärtigen Endes des Befestigungselements (2; 12) ist.

3. Befestigungssystem nach Anspruch 2, dadurch gekennzeichnet, dass das Befestigungselement (2; 12) an seinem in Setzrichtung (S) vorderen Ende einen von der Kreisringform abweichenden, vorzugsweise elliptischen, Querschnitt aufweist, der zum rückwärtigen Ende des Befestigungselements (2; 12) in einen kreisringförmigen Querschnitt übergeht.

4. Befestigungssystem nach Anspruch 2 oder 3, dadurch gekennzeichnet, dass das Befestigungselement (2) entlang seiner axialen Erstreckung und über seinen Umfang verteilt eine Anzahl von Öffnungen (7) aufweist, deren Durchmesser kleiner ist als der Durchmesser des Hüllkreises der Bohrspitze (4).

5. Befestigungssystem nach einem der vorangehenden Ansprüche, dadurch gekennzeichnet, dass das rohrartige Befestigungslement (12; 22) einen sich über seine gesamte axiale Länge erstreckenden Schlitz (17; 27) aufweist und gegen die Federkraft seines Materials in radialer Richtung elastisch zusammenpressbar ist.

6. Befestigungssystem nach einem der vorangehenden Ansprüche, dadurch gekennzeichnet, dass die Bohrspitze (24) lösbar mit dem Vorderende des Befestigungselements (22) verbunden ist, insbesondere an das Vorderende ansteckbar ist, und mit der Bohreinrichtung (23) drehfest verbindbar ist, insbesondere auf ein Schaftende (26) der Bohreinrichtung (23) aufsteckbar ist, und axial wieder vom Schaftende (26) lösbar ist.

7. Verfahren zur Erstellung von Befestigungen, bei dem mit einer Bohreinrichtung (3; 23) eine Aufnahmebohrung erstellt und ein Befestigungselement (2; 12; 22) in der Aufnahmebohrung verankert wird, dadurch gekennzeichnet, dass die Bohreinrichtung (3; 23) durch eine axiale Durchgangsbohrung im Befestigungselement (2; 12; 22) geführt wird und das Befestigungselement (2; 12; 22), welches gegenüber dem Durchmesser der Aufnahmebohrung ein Übermass aufweist, gleichzeitig mit dem Bohrvorgang durch schlagendes Eintreiben in der Aufnahmebohrung verankert, insbesondere verklemmt wird.

8. Verfahren nach Anspruch 7, dadurch gekennzeichnet, dass die im Querschnitt im wesentlichen kreisrunde Aufnahmebohrung beim schlagenden Eintreiben des Befestigungselements (2; 12) durch Schneiden (8; 18) am in Setzrichtung (S) vorderen Ende des Befestigungselements (2; 12), welches einen von der Kreisringform abweichenden, insbesondere elliptischen, Querschnitt aufweist, kalibriert wird, und dass die Verankerung des Befestigungselements (2; 12) durch Verklemmen des einen kreisringförmigen Querschnitt aufweisenden rückwärtigen Abschnitts des Befestigungselements (2; 12) in der auf den Querschnitt seines Vorderendes kalibrierten Aufnahmebohrung erfolgt.

9. Verfahren nach Anspruch 7 oder 8, dadurch gekennzeichnet, dass die Verankerung des ein Übermass aufweisenden Befestigungselements (12; 22) in der Aufnahmebohrung durch elastisches radiales Zusammenpressen des über seine gesamte axiale Länge mit einem Schlitz (17; 27) versehenen Befestigungselements (12; 22) gegen die Federkraft seines Materials beim schlagenden Eintreiben in die Aufnahmebohrung erfolgt.

10. Verfahren nach einem der Ansprüche 7 - 9, dadurch gekennzeichnet, dass das Befestigungselement (22) an seinem in Setzrichtung (S) vorderen Ende lösbar mit einer Bohrspitze (24) versehen wird, an die ein durch die axiale Bohrung des Befestigungselements (22) geführtes Schaftende (26) der Bohreinrichtung (23) drehfest angekoppelt wird, welche Bohrspitze (24) beim Erstellen der Aufnahmebohrung ausser Eingriff mit und gegenüber dem Befestigungselement (22) drehentkoppelt ist und beim axialen Entfernen des Schaftes (26) aus der axialen Bohrung des Befestigungselements wieder vom Schaft (26) der Bohreinrichtung (23) gelöst wird, wobei eine definierte Mindestkraft aufgebracht werden muss, und in der mit dem Befestigungselement (22) bestückten Aufnahmebohrung verbleibt.

## Claims

1. A fastening system comprising a drilling device (3; 23) for producing locating holes which is equipped with a drill tip (4; 24) and the opposite end of which to the drill tip (4; 24) is designed as an insertion end (5; 25) for a hand-held device equipped with a rotary drive and with a hammer mechanism for axial blows, and comprising a tubular fastening element (2; 12; 22) which can be anchored in a locating hole and which has an axial through-hole, **characterised in that** the fastening element (2; 12; 22) has an outside diameter which is larger than the diameter of the enveloping circle of the drill tip (4; 24), that the drilling device (3; 23) passes through the axial through-hole of the tubular fastening element (2; 12; 22), wherein the drill tip (4; 24) protrudes beyond the fastening element (2; 12; 22) at the front end thereof in the direction of placement (S) and the insertion end (5; 25) of the drilling device (3; 23) protrudes beyond the fastening element (2; 12; 22) at the rear end thereof, that during the fastening operation the drilling device (3; 23) and the fastening element (2; 12; 22) are rotationally uncoupled and the rear end of the fastening element (2; 12; 22) is in contact with the hand-held device so that the axial blows produced by the hammer mechanism can be transmitted on to the fastening element (2; 12; 22), wherein simultaneously with the production of the locating hole the fastening element (2; 12; 22) is driven into the locating hole and is anchored there.

2. A fastening system according to claim 1, characterised in that at its front end in the direction of placement the fastening element (2; 12) is equipped with cutting edges (8; 18) and has a cross-sectional profile in the region of the cutting edges (8; 18) which is different from the cross-sectional profile of the rear end of the fastening element (2; 12).

3. A fastening system according to claim 2, characterised in that at its front end in the direction of placement (S) the fastening element (2; 12) has a cross-section which differs from the shape of a circular ring and which is preferably elliptical, and which extends into a cross-section in the shape of a circular ring towards the rear end of the fastening element (2; 12).

4. A fastening system according to claims 2 or 3, characterised in that the fastening element (2) has a number of openings (7) along its axial extent and distributed round its periphery, the diameter of which openings is smaller than the diameter of the enveloping circle of the drill tip (4).

5. A fastening system according to any one of the preceding claims, characterised in that the tubular fastening element (12; 22) has a slit (17; 27) which extends over its entire axial length, and can be elastically compressed radially against the spring force of the material of the fastening element.

6. A fastening system according to any one of the preceding claims, characterised in that the drill tip (24) is removably attached to the front end of the fastening element (22) and in particular can be fitted to the front end thereof, and can be attached fixed in rotation to the drilling device (23), particularly to a shank end (26) of the drilling device (23), and can be removed again axially from said shank end (26).

7. A method of producing fastenings in which a locating hole is produced by a drilling device (3; 23) and a fastening element (2; 12; 22) is anchored in the locating hole, characterised in that the drilling device (3; 23) is passed through an axial through-hole in the fastening element (2; 12; 22), and the fastening element (2; 12; 22), which is oversized in relation to the diameter of the locating hole, is anchored in the locating hole, and in particular is jammed therein, by driving it in by a hammering action simultaneously with the drilling operation.

8. A method according to claim 7, characterised in that the locating hole, which is substantially circular in cross-section, is sized when the fastening element (2; 12) is driven in by a hammering action, by cutting edges (8; 18) at the front end of the fastening element (2; 12) in the direction of placement (5), which fastening element has a cross-section which differs from the shape of a circular ring and which in particular is elliptical, and that the fastening element (2; 12) is anchored by the jamming of the rear section of the fastening element (2; 12), which has a cross-section in the shape of a circular ring, in the locating hole which is sized to match the cross-section of the front end of the fastening element.

9. A method according to claims 7 or 8, characterised in that the oversized fastening element (12; 22), which is provided with a slit (17; 27) extending over its entire axial length, is anchored in the locating hole by the elastic radial compression of the fastening element (12; 22) against the spring force of the material thereof when it is driven into the locating hole under a hammering action.

10. A method according to any one of claims 7 - 9, characterised in that at its front end in the direction of placement (S) the fastening element (22) is provided with a detachable drill tip (24) to which a shank end (26) of the drilling device (23) which is passed through the axial hole in the fastening element (22) is coupled fixed in rotation, which drill tip (24) is disengaged from and rotationally uncoupled from the fastening element (22) whilst the locating hole is being produced, and when the shank (26) is removed axially from the axial hole in the fastening element the drill tip is detached from the shank (26) of the drilling device (23) again, whereupon a defined minimum force has to be applied, and remains in the locating hole which is fitted with the fastening element (22).

## Revendications

1. Système de fixation comprenant un dispositif de forage (3 ; 23) pour réaliser des trous récepteurs, ledit dispositif de forage étant muni d'une pointe de forage (4 ; 24) et son extrémité située à l'opposé de la pointe de forage (4 ; 24) étant conçue sous la forme d'une extrémité insérable (5 ; 25) pour un appareil portatif muni d'un moyen d'entraînement en rotation et d'un mécanisme de percussion pour percussions axiales, et comprenant un élément tubulaire de fixation (2 ; 12 ; 22) ancrable dans un trou récepteur et pourvu d'un trou axial débouchant, caractérisé en ce que l'élément de fixation (2 ; 12 ; 22) présente un diamètre extérieur supérieur au diamètre extérieur du cercle d'enveloppe de la pointe de forage (4 ; 24), en ce que le dispositif de forage (3 ; 23) traverse le trou axial débouchant de l'élément tubulaire de fixation (2 ; 12 ; 22), la pointe de forage (4 ; 24) dépassant axialement de l'élément de fixation (2 ; 12 ; 22) au niveau de l'extrémité de ce dernier située à l'avant par rapport au sens d'enfoncement (S) et l'extrémité insérable (5 ; 25) du dispositif de forage (3 ; 23) dépassant de l'élément de fixation (2 ; 12 ; 22) au niveau de l'extrémité arrière de celui-ci, en ce que le dispositif de forage (3 ; 23) et l'élément de fixation (2 ; 12 ; 22) sont dissociés en rotation lors de l'opération de fixation et l'extrémité arrière de l'élément de fixation (2 ; 12 ; 22) est en contact avec l'appareil portatif de façon que les percussions axiales produites par le mécanisme de percussion puissent être transmises à l'élément de fixation (2 ; 12 ; 22), l'élément de fixation (2 ; 12 ; 22) étant enfoncé dans le trou récepteur et y étant ancré au fur et à mesure que ledit trou récepteur est réalisé.

2. Système de fixation selon la revendication 1, caractérisé en ce que, à son extrémité située à l'avant par rapport au sens d'enfoncement, l'élément de fixation (2 ; 12) est muni de taillants (8 ; 18) et présente, dans la zone des taillants (8 ; 18), un contour transversal qui est différent du contour transversal de l'extrémité arrière de l'élément de fixation (2 ; 12).

3. Système de fixation selon la revendication 2, caractérisé en ce que, à son extrémité située à l'avant par rapport au sens d'enfoncement (S), l'élément de fixation (2 ; 12) présente une section autre que circulaire, par exemple elliptique, laquelle se transforme en une section circulaire vers l'extrémité arrière de l'élément de fixation (2 ; 12).

4. Système de fixation selon la revendication 2 ou 3, caractérisé en ce que l'élément de fixation (2) est pourvu d'une pluralité d'orifices (7) qui sont répartis le long de son extension axiale et sur sa périphérie et dont le diamètre est inférieur au diamètre du cercle d'enveloppe de la pointe de forage (4).

5. Système de fixation selon une des revendications précédentes, caractérisé en ce que l'élément tubulaire de fixation (12 ; 22) est pourvu d'une fente (17 ; 27) qui s'étend sur toute sa longueur axiale et qui est compressible élastiquement dans la direction radiale à l'encontre de la force élastique de son matériau.

6. Système de fixation selon une des revendications précédentes, caractérisé en ce que la pointe de forage (24) est reliée de manière détachable à l'extrémité avant de l'élément de fixation (22), en particulier est enfichée dans l'extrémité avant, et est solidarisée en rotation au dispositif de forage (23), en particulier est emmanchée sur une extrémité de queue (26) du dispositif de forage (23), et peut à nouveau être retirée axialement de l'extrémité de queue (26).

7. Procédé pour réaliser des fixations, dans lequel un trou récepteur est réalisé à l'aide d'un dispositif de forage (3 ; 23), et un élément de fixation (2 ; 12 ; 22) est ancré dans le trou récepteur, caractérisé en ce que le dispositif de forage (3 ; 23) est guidé dans l'élément de fixation (2 ; 12 ; 22) à travers un trou axial débouchant, et l'élément de fixation (2 ; 12 ; 22), lequel présente une surmesure par rapport au diamètre du trou récepteur, est ancré, en particulier coincé, dans le trou récepteur par enfoncement percutant simultanément à l'opération de forage.

8. Procédé selon la revendication 7, caractérisé en ce que, lors de l'enfoncement percutant de l'élément de fixation (2 ; 12), le trou récepteur à section sensiblement circulaire est calibré par des taillants (8 ; 18) prévus à l'extrémité de l'élément de fixation (2 ; 12) qui est située à l'avant par rapport au sens d'enfoncement (S) et qui présente une section autre que circulaire, en particulier elliptique, et en ce que l'ancrage de l'élément de fixation (2 ; 12) s'effectue par coincement de la portion arrière à section circulaire de l'élément de fixation (2 ; 12) dans le trou récepteur calibré à la section de l'extrémité avant dudit élément de fixation (2 ; 12).

9. Procédé selon la revendication 7 ou 8, caractérisé en ce que l'ancrage de l'élément de fixation (12 ; 22), présentant une surmesure, dans le trou récepteur s'effectue par compression radiale élastique de l'élément de fixation (12 ; 22), pourvu d'une fente (17 ; 27) sur toute sa longueur axiale, à l'encontre de la force élastique de son matériau lors de son enfoncement percutant dans le trou récepteur.

10. Procédé selon l'une des revendications 7 à 9, caractérisé en ce que, à son extrémité située à l'avant par rapport au sens d'enfoncement (S), l'élément de fixation (22) est pourvu d'une pointe de forage (24) à laquelle une extrémité de queue (26) du dispositif de forage (23) guidée à travers le trou axial de l'élément de fixation (22) est accouplée de manière solidaire, ladite pointe de forage (24) étant mise hors prise et dissociée en rotation par rapport à l'élément de fixation (22) lors de la réalisation du trou récepteur et à nouveau détachée de la queue (26) du dispositif de forage (23) lors du retrait axial de la queue (26) hors du trou axial de l'élément de fixation, sous réserve qu'une force minimale définie soit alors exercée, et restant dans le trou récepteur garni de l'élément de fixation (22).
